# EUROPÄISCHE PATENTSCHRIFT

(11) **EP 1 877 606 B1**
(45) Veröffentlichungstag und Bekanntmachung des Hinweises auf die Patenterteilung: **07.04.2010**
(21) Anmeldenummer: 06724605.8
(22) Anmeldetag: 27.04.2006
(51) Int. Cl.: D02G 3/44, D04B 1/14

(54) **VERFAHREN ZUR HERSTELLUNG TEXTILER FLÄCHEN MIT FUNKTIONSFÄDEN**
METHOD FOR PRODUCING TEXTILE FABRICS WITH FUNCTIONAL THREADS
PROCEDE DE PRODUCTION DE SURFACES TEXTILES A FILS FONCTIONNELS

(30) Priorität: 03.05.2005 AT 7642005; 27.07.2005 AT 12632005
(43) Veröffentlichungstag der Anmeldung: 16.01.2008
(73) Patentinhaber: Prevent Austria GmbH, 3500 Krems / Donau (AT)
(72) Erfinder: HERTWIG, Klaus, 87600 Kaufbeuren (DE); SCHALKO, Walter, A-3571 Gars am Kamp (AT)
(74) Vertreter: Puchberger, Peter
(86) Internationale Anmeldenummer: PCT/EP2006/003913
(87) Internationale Veröffentlichungsnummer: WO 2006/117127

(56) Entgegenhaltungen:
- EP-A- 0 532 468
- EP-A- 1 631 122
- WO-A-03/021312
- DE-A1- 10 320 650
- DE-A1- 10 342 285
- US-B1- 6 397 641

## Beschreibung

Die Erfindung betrifft ein Verfahren zur Herstellung textiler Flächen und textile Flächen, die nach diesem Verfahren hergestellt sind. Weiter betrifft die Erfindung einen Leuchtkörper unter Verwendung derartiger textiler Flächen.

Insbesondere betrifft die Erfindung eine dehnfähige textile Fläche in Form einer Maschenware. Bevorzugt sind die in der Maschenware eingelegten Funktionsfäden Lichtwellenleiter.

Leuchtende Textilien sind seit langem bekennt. Stand der Technik ist, dass Lichtwellenleiter-Filamente aus Kunststoff in die textile Fläche eingebracht, vorzugwelse eingewebt, werden. Die GB 2305848 A beschreibt, wie die radiale Abstrahlung durch mechanische Modifikation der Oberfläche verbessert wird. In der WO0212785 wird die radiale Abstrahlung durch Dotierung der Faser mit reflektierenden Verunreinigungen oder durch Anätzen mit Lösungsmitteln verbessert. Diese Modifizierungen führen zu Abstrahlverlusten, die die Reichweite des Lichtes in der Faser reduzieren, was zu einer immer dunkler werdenden Fläche führt
Gewebe mit optischen Glasfasern als Lichtwellenleiter werden wegen der extremen Empfindlichkeit bei der Verarbeitung nicht eingesetzt. Bekannt sind Gewebe mit PMMA - Lichtwellenleiter, deren Nachteile in der Fehlerhäufigkeit durch Strukturbrüche und hohe Empfindlichkeit gegen mechanische Beschädigung liegen. Die Ursache hierfür liegt in der konstruktiv und werkstoffbedingt geringen Dehnfähigkeit sowohl während der Erstellung als auch im Gebrauch. Weitere Nachteile ergeben sich bei der Anspeisung an den Kanten der Gewebe bzw. durch die platzintensiven Elnspeisungssysteme.

Die DE 3430716 A1 beschreibt das Anbringen von Lichtleitfasern an der sichtbaren Oberfläche von Bekleidungsstücken. Diese bestehen aus Gewebe oder Kunststoffen, und die Lichtleitfaser wird erst nach der Herstellung des Kleidungsstücks aufgebracht. Deren Befestigung erfolgt zum Beispiel durch Klettverschlüsse.

GB 2305848 A beschreibt einen Stoff mit eingearbeiteten Lichtlettfasern als Warneinrichtung für Kleidungsstücke. Als Beispiele für den Stoff werden Gewebe. Gelege und Gestricke aufgeführt. Die Einarbeitung der Lichtwellenleiter ist im Detail für das Gewebe beschrieben. Eine reguläre Einarbeitung von PMMA-Filamenten in Maschenform in ein Gestrick ist nicht möglich.

WO00/61991 beschreibt ein Gewebe, bei dem die Lichtwellenleiter als Faserbündel von ca. 2,5 mm Durchmesser mit transparenter Schutzhülle in Kettrichtung mit Standardschußfäden zu einem Heimdekortextil verarbeltet werden. Der Nachteil ist insoferne offensichtlich, als nur sehr grobe Gewebe dargestellt werden können und die gesamte Zugbelastung in Kettrichtung von den empfindlichen Lichtwellenleitern getragen wird,

WO 0212785 A1 beschrelbt ein Gewebe mit entweder im Kett- oder Schußsystem zusätlich verwendeten einzelnen Lichtwellenleitern, bei dem durch bindungsgemäßes Auslassen der Lichtwellenleiter, diese an der Oberfläche exponiert werden. Die Einspeisung erfolgt über gebündelte Lichtwellenleiter per LED zentral, In diesem Fall lässt die mechanische Empfindlichkeit der Oberfläche und die geringe Dehnung des Gewebes auf ein begrenztes Einsatzgeblet ohne Verformungs- oder oberflächenmechanische Belastung schließen, desgleichen die Art der Anspeisung, die bauraumaufwendig und empfindlich ist, wobei die Alltagstauglichkeit in Verwendung bezweifelt werden darf.

Das deutsche Gebrauchsmuster DE 29916711 U1 beschreibt eine Werbeplane, auf die elektroluminiszierende Leuchtmittel in Folienform oder in Form von Leuchtschnüren aufgebracht sind. Elektroluminiszenzfolien weisen jedoch gravierende Nachteile auf: - sie benötigen zum Betrieb eine elektronisch erzeugte Wechselspannung und verändern mit zunehmender Alterung ihre Leuchtfarbe und Intensität.

Die DE 10012614 A1 beschreibt eine Fahne aus einem textilen Material, in die eine Lichtleitfaser zur besseren Sichtbarkeit in der Nacht eingearbeitet ist. Als Stoff wird ein Gewebe oder ein Gestrick eingesetzt. Die Lichtleitfaser besteht aus einem radial abstrahlenden Glasfaden, der im Fall eines Gestricks als Deckschichtfaden oder Zwischenfaden, zB. als Polsteg, eingearbeitet ist. Ein Nachteil dieser Konstruktion besteht In der Brüchigkeit des Glasfadens, speziell bei einer Einarbeitung in ein Gestrick.

Alle oben angeführten Verfahren oder Konstruktionen weisen den Nachteil einer steifen, wenig dehnbaren Konstruktion auf. Dies macht z.B. den Einsatz eines Verkleidungstextils im automobilen innenraum, wo eine dreidimensionale Verformbarkeit gefordert wird, unmöglich.

DE 103 42 285 A1 beschreibt ein Verfahren zur Herstellung von textilen Flächen, diese enthaltend elektrische Heizleiter, wobei das textile Material aus einem Abstandsgewirke besteht, wobei als in oder auf das Abstandsgewirke ein- oder aufgebrachte Heizleiter leitfähige oder mit einer leitfähigen Beschichtung versehene textile Garne verwendet werden.

Das erfindungsgemäße Verfahren ist dadurch gekennzeichnet, dass die Funktionsfäden beim Strick- oder Wirkvorgang in die Maschenreihen oder -stäbe ohne Maschenbildung eingelegt werden.

Die textile Fläche ist in erster Linie dadurch gekennzeichnet, dass die Funktionsfäden in der Fläche beweglich oder verschiebbar eingebettet sind, und dass die textile Fläche mit den darin angeordneten Funktionsfäden dreidimensional verformbar ist, wobei die Funktionsfäden in der Fläche mustermäßig abschnittsweise von Maschen, Henkel abgedeckt oder frei sichtbar sind. Bei den Funktionsfäden handelt es sich vorzugsweise um Lichtwellenleiter, die das Licht zumindest abschnittsweise in radialer Richtung abstrahlen. Diese Funktion kann z.B. bei einer Einzelfaser durch mechanische oder chemische Oberflächenbehandlung, durch Beschichtung bzw durch Steuerung des Brechungsindexes bei der Herstellung erzeugt werden. Die dabei verwendeten Lichtleiter können sowohl aus einem einzeinen Lichtwellenleiter oder auch aus einem Strang aus mehreren geflochtenen, umwundenen oder gezwirnten Lichtwellenleitern, gegebenenfalls auch als Mischung mit Standard-Mono- oder Multifilamenten aufgebaut sein. Die radiale Lichtabstrohlung kann durch die konstruktive Gestaltung dieses Strangs gesteuert werden.

Der erfindungsgemäße Leuchtkörper ist dadurch gekennzeichnet, dass er textile Flächen der beschriebenen Art sowie eine oder mehrere Lichtquellen und eine Schalt- oder Regelungavorrichtung zur Speisung der Lichtquellen aufweist.

Gemäß Erfindung wird für die Funktionsfäden eine textile Trägerstruktur in Form von Maschenware vorgesehen. Dies erfolgt in einer solchen Weise, dass die Flexibilität der textilen Fläche nicht oder nur unwesentlich beeinflusst wird. Dadurch wird erreicht, dass die textile Fläche im erforderlichen Ausmaß dreidimensional verformt werden kann, um z.B. dreidimensional gebogene Gegenstände überziehen zu können. Dabei soll das Textil bei Anordnung von Lichtwellenleitern als Funktionsfäden über die Gesamtfläche oder mustergemäß leuchten, wenn angeschiossene Lichtquellen Licht in die Lichtwellenleiter einstrahlen.

Als Lichtwellenleiter können z.B. entsprechend ausgebildete Fäden aus PMMA, PC, PA, PP oder Silikon verwendet werden. Für das Ausbilden der Gestricke werden z.B. Kunststofffasern wie PET, PP oder PA verwendet.

Bevorzugt werden zweibettige Gestricke (RR/Doppeljersey) eingesetzt. Bei der Herstellung dieser textilen Flächen wird der Lichtwellenleiter oder der Lichtwellenleiterstrang zwischen den beiden Flächen während des Strickprozesses eingelegt. Die Mustergestaltung findet durch unterschiedliche Teilreihenbindung einer oder mehrerer vorhergehender Reihen sowie der nachfolgenden Reihen und/oder Umhängen in das andere Nadelbett statt, sodass an den mustermäßig gewünschten Stellen die Lichtwellenleiter nach einer oder beiden Seiten hin sichtbar werden. Dabei ist es vor teilhaft, wenn aus Gründen der mechanischen Beständigkeit die Lichtwellenleiter unter der Textiloberfläche gehalten werden.

Die erfindungsgemäßen textilen Flächen sollen insbesondere dazu verwendbar sein, im Automobilinnenraum auf einem Träger als Beleuchtungselement, bevorzugt für eine ambiente Ausleuchtung, Verwendung zu finden. Zufolge der guten Verformbar keit solcher textiler Flächen können auch dreidimensionale Träger bespannt werden, wie z.B Türflächen, Türinserts, Zieretemente wie Leisten aber auch Dachsäulen oder Dachhimmel von Fahrzeugen. Auch Ablagefächer, Taschen und Staufächer können so mit einer ambienten Ausleuchtung ausgestattet werden.

Die erfindungsgemäße textile Konstruktion lässt eine leichte Verschiebung der Trägerstruktur in Achsrichtung des Funktionsfadens zu. Die auf optischer Basis angespeisten Lichtwellenleiter können über bekannte Koppelungselemente aus der Datentechnik und/oder über geeignete Fokussier-, Spiegel- oder Prismenkörperelementen angespeist werden. Die Lichtquelle kann entweder zentral über einen Standardlichtwellenleiter versorgt werden, oder auch dezentral und/oder mehrfach am Ort des Funktionstextils vorgeschaltet sein. Zum Beispiel ist durch LEDs eine direkte Lichteinspelsung an Jeder Einzelfaser möglich. Durch eine zusätzliche Fokussierung des Lichtes auf den Einspeisungspunkt kann die Lichtausbeute deutlich verbessert werden. Das kann durch geeignete Reflektoren, Prismen und / oder Spiegel erreicht werden. Die Wahl der Lichtquelle ist primär frei, unterliegt jedoch den lichttechnischen Anforderungen und konstruktiven Rahmenbedingungen, wobei beilspielsweise bei sehr kleinem Bauraum LEDs aus Gründen des Designs und der Abwärme bevorzugt werden. Bei einer Prismeneinspeisung oder einer zentralen Lichtquelle ist die Verwendung von z.B. Halogenlampen vorteilhaft

Die Lichtwellenleiter können auch zur Abgabe farbigen Lichtes oder Lichtes mit einer Wellenlänge außerhalb des sichtbaren Lichtspektrums eingerichtet sein.

Weitere Merkmale der Erfindung sind den Ansprüchen, der Beschreibung sowie den Zeichnungen zu entnehmen.

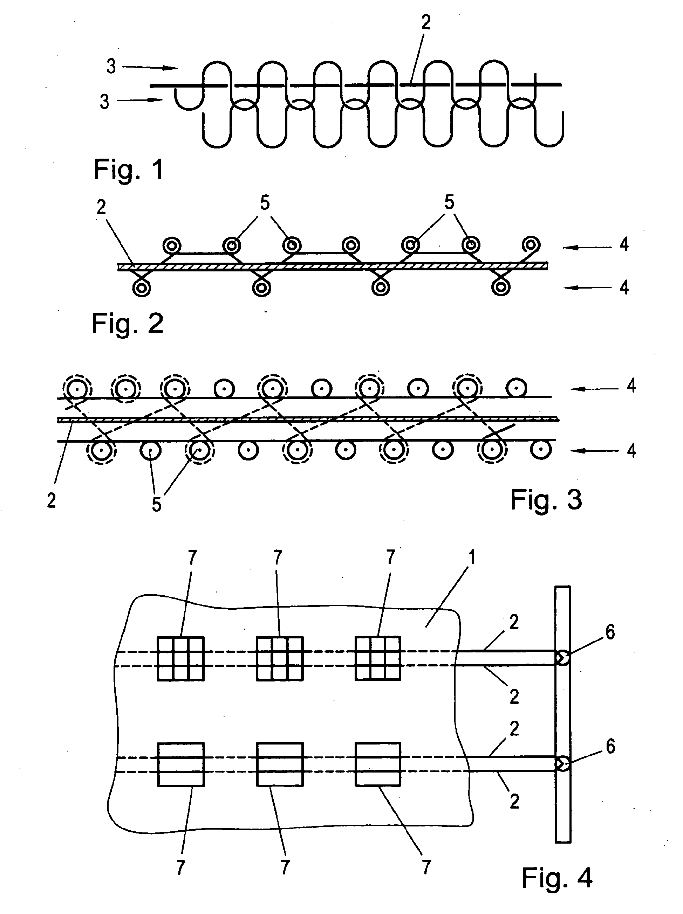

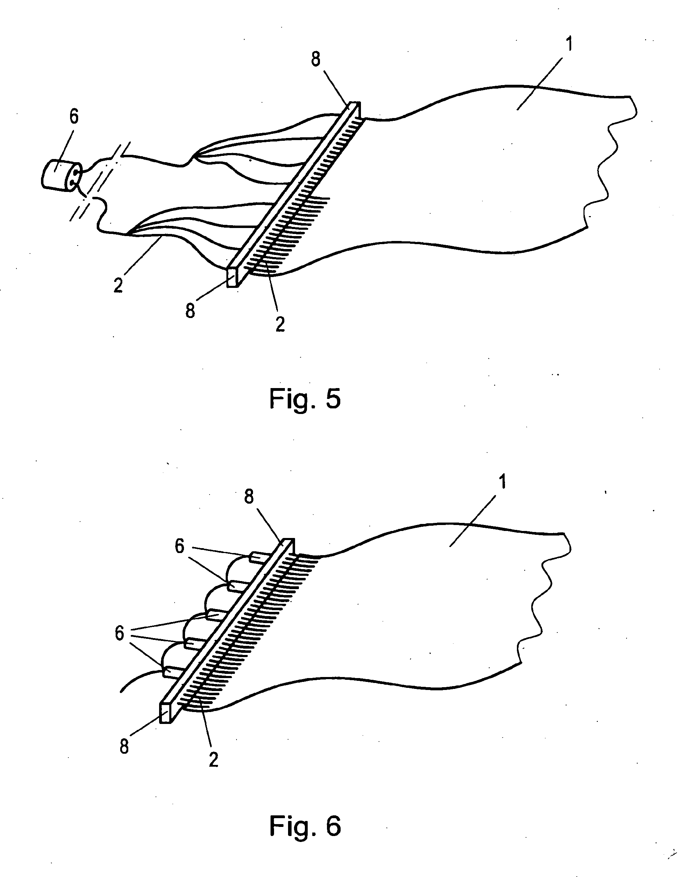

Fig 1. zeigt eine Detailansicht von Maschenreihen mit darin angeordnetem Funktionsfaden. Fig 2 zeigt einen Schnitt durch ein doppellagiges Gestrick mit dazwischen angeordnetem Funktionsfaden. Fig 3 zeigt einen weiteren Schnitt durch ein doppellagiges Gestrick mit dazwischen angeordnetem Funktionsfaden, wobei in einer der beiden Gestricklagen jeweils mustergemäß Maschen ausgelassen sind. Fig. 4 zeigt eine erfindungsgemäße textile Fläche in einer Aufsicht bei der einzelne Stellen mustergemäß derart ausgebildet sind, dass die Funktionsfäden sichtbar sind. Fig. 5 bis 7 zeigen verschiedene Ausführungsförmen erfindungsgemäßer textiler Flächen mit daran angeschlossene Lichtquellen.

In Fig. 1 sind ausschnittsweise zwei Maschenreihen 3 eines Gestricks im Detail dargestellt, wobei ein Funktionsfaden 2, in diesem Fall ein Lichtwellenleiter währand des Strickens in die Maschenware eingearbeitet wurde.

Die Fig. 2 und 3 zeigen jeweils einen Schnitt durch zwei Gestricklagen 4 eines doppellagigen Gestricks. Die maschenbildenden Fäden werden dabei jeweils um die Nadeln 5 geschlungen, die dann die nächste Maschenreihe in der textilen Fläche 1 bilden. Zwischen den beiden Gestricklagen wird der Lichtwellenferter 2 eingelegt und durch Bildung der darauffolgenden doppellagigen Maschenreihe in der textilen. Fläche umschlossen. Der empfindliche Lichtwollenleiter ist dadurch nicht direkt am Aufbau des Gestricks betelligt und unterliegt somit keinen daraus resultierenden mechanischen Belastungen. Weiters bleibt der Lichtwellenleiter in der fertigen textilen Fläche geringfügig hin- und herbewegbar, wodurch er etwalgen Belastungen durch die dreidimensionale elastische Verformung des fertigen Gestricks weitgehend ausweichen kann. Wie in Fig. 3 zu sehen ist, kann der Lichtwellenleiter durch Anordnen bestimmter Maschen in einer und/oder der anderen Gestricklage 4 derart angeordnet sein, dass er zumindest teilweise sichtbar ist. Im gezeigten Beispiel wird durch ausgelassene Maschen in der unteren Gestricklage 4 ein in diese Richtung sichtbares Muster gebildet.

In Fig. 4 ist eine beispielhafte textile Flasche 1 gezeigt, bei der von einer Lichtquelle 6 gespeiste Lichtwellenleiter 2 mustermäßig in die Fläche eingearbeitet wurden. In diesem Beispiel sind sechs quadratische Flächen derart gestrickt, dass durch Auslassungen bestimmter Maschen, wie In Fig. 3 gezeigt Musterflächen 7 entstehen, wo die eingearbeiteten Lichtwellenleiter 2 sichtbar sind. Durch Anspeisung der Lichtwellenleiter 2 über die Lichtquellen 6 leuchten die Musterflächen 7, während die restliche textile Fläche 1 durch die dichtere Maschenbildung über den Lichtwellenllettem 2 gar nicht oder schwächer leuchtet

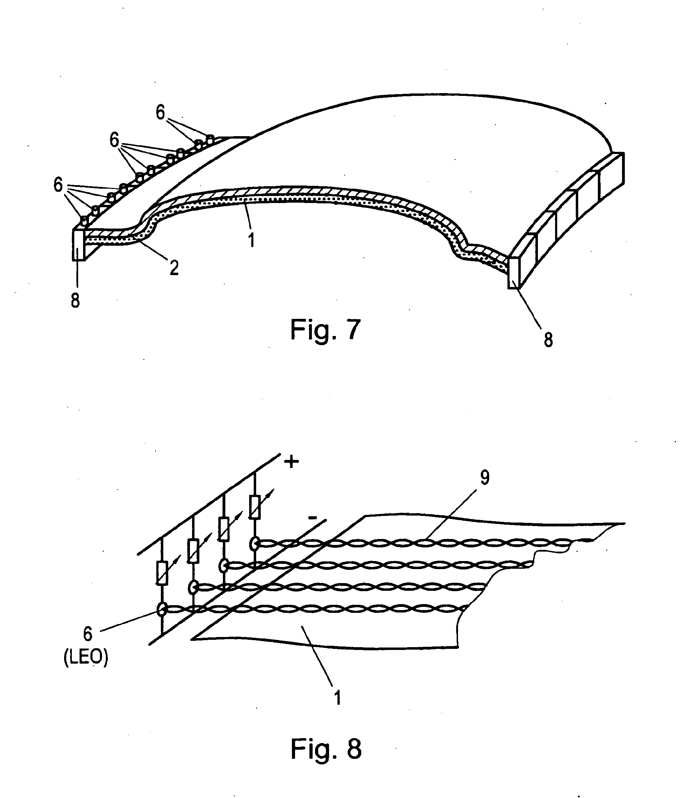

Die Figuren 5 bis 8 zeigen jeweils Detationsichten unterschiedlicher Ausführungsbeispiele erfindungsgemäßer textiler Flächen 1 oder Leuchtkörper. Die Lichtquelle 6 kann dabei entweder zentral wie in Fig. 5 gezeigt angeordnet sein, oder dezentral jeweils einzeine oder wenige Lichtwellenleiter 2, wie In den Fig. 6 oder 7, oder Lichtwellenstränge 9, wie in Fig. 8 gezeigt, anspeisen. Die Lichtübertragung kann direkt auf die Lichtwellenleiter 1 oder Lichtwellenstränge 9 erfolgen (siehe Fig. 8), oder über optische Transportsysteme wie Prismenkörperelemente 8, mattierte Kunststoffleisten oder dergleichen (siehe Fig. 5 bis 7) erfolgen. Die Verwendung optischer Transport systeme wie Prismenkörperelemente hat den Vorteil, dass das Licht gleichmäßiger auf alle Lichtwellenleiter 2 in der textilen Fläche 1 verteilt wird.

## Patentansprüche

1. Verfahren zur Herstellung textiler Flächen mit darin angeordneten Funktionsfäden, wobei die Funktionsfäden (2) Lichtwellenleiter sind, die das Licht zumindest abschnittsweise in radialer Richtung abstrahlen **dadurch gekennzeichnet, dass** die Funktionsfäden beim Strick- oder Wirkvorgang in die Maschenreihen oder -stäbe ohne Maschenbildung eingelegt werden.

2. Verfahren nach Anspruch 1, **dadurch gekennzeichnet, dass** die textile Fläche (1) als zweibettige Maschenware gestrickt wird, wobei die Funktionsfäden (2) zwischen die beiden Strickflächen eingelegt sind.

3. Verfahren nach Anspruch 1 oder 2, **dadurch gekennzeichnet, dass** die Funktionsfäden (2) durch umliegende Maschen, Henkel und Unterlegungen der Maschenware im Textilvertiund gehalten werden.

4. Textile Fläche hergestellt nach einem der Ansprüche 1 bis 3, **dadurch gekennzeichnet, dass** die Funktionsfäden (2) in der Fläche (1) beweglich oder verschiebbar eingebettet sind, und dass die textile Fläche (1) mit den darin angeordneten Funktionsfäden (2) dreidimensional verformbar ist.

5. Textile Fläche nach Anspruch 4, **dadurch gekennzeichnet, dass** die Funktionsfäden (2) mustermäßig abschnittsweise durch Anordnung von Masche, Henkel und/oder Unterlegung frei sichtbar sind.

6. Textile Fläche nach einem der Ansprüche 1 bis 5, **dadurch gekennzeichnet, dass** der Lichtwellenleiter (2) ein einzelner Lichtwellenleiter (2) oder ein Strang (9) aus mehreren geflochtenen, umwundenen oder gezwirnten Lichtwellenleitern, oder eine Mischung mit Standard-Mono- oder Multifilamenten ist.

7. Textile Fläche nach einem der Ansprüche 1 bis 6, **dadurch gekennzeichnet, dass** die Lichtwellenleiter (2) mit zumindest jeweils einem ihrer Enden an eine oder mehrere Lichtquellen (6) angeschlossen sind.

8. Leuchtkörper, **dadurch gekennzeichnet, dass** er textile Flächen (1) gemäß einem der Ansprüche 1 bis 7, eine oder mehrere Lichtquellen (6) sowie eine Schalt- und/oder Regelungsvorrichtung zur Speisung der Lichtquellen aufweist.

9. Leuchtkörper nach Anspruch 8, **dadurch gekennzeichnet, dass** die Lichtwellenleiter (2) oder der Lichtwellenleiterstrang (9) über ein optisches Transportsystem (8), wie z. B. über Fokussier-, Spiegel- und/oder Prismenkörperelemente mit der Lichtquelle verbunden sind.

## Claims

1. Process for producing textile fabrics incorporating functional threads wherein the functional threads (2) are optical waveguides which at least sectionally divert the transmitted light outwardly in the radial direction, **characterized in that** the functional threads are inlaid during the knitting operation into the courses or wales without loop formation.

2. Process according to Claim 1, **characterized in that** the textile fabric (1) is rib knitted and the functional threads (2) are inlaid between the two knitted faces.

3. Process according to Claim 1 or 2, **characterized in that** the functional threads (2) are held in the textile assembly by surrounding stitches, loops and underlaps of the knitted material.

4. Textile fabric produced according to any one of Claims 1 to 3, **characterized in that** the functional threads (2) embedded in the fabric (1) are movable or displaceable and **in that** the textile fabric (1) incorporating functional threads (2) is three-dimensionally formable.

5. Textile fabric according to Claim 4, **characterized in that** the functional threads (2) are sectionally and patternedly freely visible through arrangement of stitch, loop and/or underlap.

6. Textile fabric according to any one of Claims 1 to 5, **characterized in that** the optical waveguide (2) is an individual optical waveguide (2) or a strand (9) of multiple braided, wrapped or plied optical waveguides, or a mixture with standard mono- or multifilaments.

7. Textile fabric according to any one of Claims 1 to 6, **characterized in that** the optical waveguides (2) are each connected with at least one of their ends to one or more light sources (6).

8. Luminary, **characterized in that** it includes textile fabrics (1) according to any one of Claims 1 to 7, one or more light sources (6) and also a switching and/or control device for feeding the light sources.

9. Luminary according to Claim 8, **characterized in that** the optical waveguides (2) or the optical waveguide strand (9) are connected to the light source via an optical transportation system (8), for example via focusing, mirror and/or prismatic body elements.

## Revendications

1. Procédé de fabrication de surfaces textiles présentant des fils fonctionnels, ceux-ci étant des conducteurs d'ondes lumineuses qui rayonnent la lumière au moins en partie en direction radiale, ce procédé étant **caractérisé en ce que** les fils fonctionnels (2) sont, au cours de l'opération de tricotage ou de maillage, insérés dans les rangées ou colonnes de mailles sans formation de mailles.

2. Procédé selon la revendication 1, **caractérisé en ce que** la surface textile (1) est tricotée sous la forme de produit à mailles en deux couches, les fils fonctionnels (2) étant insérés entre les deux surfaces tricotées.

3. Procédé selon la revendication 1 ou 2, **caractérisé en ce que** les fils fonctionnels (2) sont maintenus dans le composite textile par des mailles environnantes, des bouclettes et des parties inférieures de support dans le produit textile.

4. Surface textile fabriquée selon une des revendications 1 à 3, **caractérisée en ce que** les fils fonctionnels (2) sont noyés dans la surface (1) avec possibilité de se déplacer ou de coulisser, et cette surface textile (2) avec les fils fonctionnels qu'elle contient, est déformable dans les trois dimensions.

5. Surface textile fabriquée selon la revendication 4, **caractérisée en ce que** les fils fonctionnels (2) sont librement visibles localement selon un modèle, par la disposition des mailles, des bouclettes et/ou des parties inférieures.

6. Surface textile fabriquée selon une des revendications 1 à 5, **caractérisée en ce que** le conducteur d'onde lumineuse est un conducteur individuel (2) ou un faisceau (9) composé de plusieurs conducteurs d'onde lumineuse tressés, enroulés en spirale ou retordus, ou un mélange avec des monofilaments ou des multifilaments standards.

7. Surface textile fabriquée selon une des revendications 1 à 6, **caractérisée en ce que** les conducteurs d'onde lumineuse (2) sont raccordés chacun par au moins une extrémité à une ou plusieurs sources lumineuses (6).

8. Corps lumineux, **caractérisé en ce qu'**il présente des surfaces textiles (1) selon une des revendications 1 à 7, une ou plusieurs sources lumineuses (6) ainsi qu'un dispositif de coupure et/ou de régulation pour l'alimentation des sources lumineuses.

9. Corps lumineux selon la revendication 8, **caractérisé en ce que** les conducteurs d'onde lumineuse (2) et les faisceaux de conducteurs d'onde lumineuse (9) sont reliés à la source lumineuse par un système optique de transport (8), comme par exemple des éléments de focalisation, des éléments à miroirs et/ou à prismes.
